Europäisches Patentamt

European Patent Office

Office européen des brevets

(19)

(11) **EP 0 718 746 B1**

(12) **FASCICULE DE BREVET EUROPEEN**

(45) Date de publication et mention
de la délivrance du brevet:
**23.03.2005 Bulletin 2005/12**

(51) Int Cl.[7]: **G06F 1/035**, G06F 7/52,
G06F 7/544

(21) Numéro de dépôt: **95203453.6**

(22) Date de dépôt: **12.12.1995**

(54) **Multiplieur de booth pour fonctions trigonométriques**

Booth-Multiplizierer für trigonometrische Funktionen

Booth multiplier for trigonometric functions

(84) Etats contractants désignés:
**DE FR GB**

(30) Priorité: **21.12.1994 FR 9415410**

(43) Date de publication de la demande:
**26.06.1996 Bulletin 1996/26**

(73) Titulaire: **Koninklijke Philips Electronics N.V.
5621 BA Eindhoven (NL)**

(72) Inventeurs:
• **Martinez, Georges, c/o Société Civile S.P.I.D.
75008 Paris (FR)**

• **Chauve, Nicolas, c/o Société Civile S.P.I.D.
75008 Paris (FR)**

(74) Mandataire: **Chaffraix, Jean et al
Société Civile SPID,
156, Boulevard Haussmann
75008 Paris (FR)**

(56) Documents cités:
**FR-A- 2 208 554        GB-A- 2 152 715
US-A- 4 159 527        US-A- 5 276 633**

**Description**

L'invention concerne un circuit pour multiplier des données par des valeurs d'une fonction trigonométrique d'une variable d'entrée, le circuit comprenant :

- des premiers moyens pour exécuter une multiplication en appliquant un algorithme de Booth,
- des seconds moyens pour générer des commandes appliquées aux premiers moyens, dont des commandes de signe, conformément à l'algorithme de Booth,
- des troisièmes moyens pour délivrer les valeurs de la fonction trigonométrique.

Elle concerne aussi un système de traitement numérique utilisant un tel circuit et plus particulièrement un système pour un calcul de transformées de Fourier ou autres. Elle concerne aussi un système de transmission numérique comprenant un circuit numérique de récupération de porteuse.

Il est courant d'utiliser des circuits pour le calcul de transformées de Fourier dans le traitement numérique de signal. Une transformée de Fourier directe et une transformée de Fourier réciproque concernent pour la première une transformation de signaux représentés dans le domaine temporel en signaux représentés dans le domaine fréquenciel et pour la seconde une transformation réciproque. Ces transformations qui mettent en oeuvre des fonctions exponentielles complexes impliquent la manipulation de fonctions trigonométriques. Ces manipulations nécessitent de réaliser un nombre important de multiplications par des fonctions sinus/cosinus.

Il est donc souhaitable d'utiliser des techniques rapides de multiplication pour diminuer les temps de calcul en y associant, si possible, l'utilisation d'un matériel réduit pour limiter les coûts de mise en oeuvre.

Une technique connue répondant à ces spécifications est celle de l'algorithme de Booth qui consiste à grouper les bits des opérandes d'une multiplication par groupes de 3 bits et à générer un nombre réduit de signaux de commandes, par exemple trois commandes seulement, par groupe de trois bits :

nombre réduit de signaux de commandes, par exemple trois commandes seulement, par groupe de trois bits :

- ZERO : ne rien faire
- SGN commande le signe de l'opération à effectuer
- X2 : détermine si le multiplicande doit être ajouté/retranché (selon SGN) une fois ou 2 fois aux sommes partielles.

Un multiplieur qui met en oeuvre l'algorithme de Booth, à l'aide de ces trois commandes, réalise des multiplications rapides.

Néanmoins, des techniques permettant d'améliorer encore ces performances sont toujours recherchées.

On connaît le document intitulé : "Parallel architecture modified Booth multiplier" de A.R. COOPER, IEE Proceedings Vol. 135, Pt. G., NO 3, June 1988, qui décrit un multiplieur de Booth amélioré. On connaît également du document US 5276633 un générateur de fonctions trigonométriques qui réalise une multiplication en appliquant un algorithme de Booth.

En regroupant les opérations sélectionnées par les sorties des encodeurs de Booth et en les faisant opérer en parallèle, il est possible de simplifier le déroulement des opérations réalisées selon l'algorithme de Booth. Un tel multiplieur peut être utilisé dans tout calcul et ne tient pas compte de la particularité de l'application donc des données qui sont à multiplier entre-elles.

Un objet de l'invention est de simplifier encore la construction d'un multiplieur de Booth en tenant compte de la spécificité des données notamment dans l'exploitation des données trigonométriques.

Ce but est atteint avec un circuit pour multiplier des données par des valeurs d'une fonction trigonométrique d'une variable d'entrée, tel que défini dans la revendication 1.

Ainsi avantageusement, en stockant uniquement les valeurs pour un domaine limité de la variable d'entrée (par exemple $-\pi/2 \leq \theta \leq 0_1$ pour une fonction cos θ), on réduit très sérieusement la taille de la mémoire. De plus, en faisant que la commande de signe soit modifiée après les moyens qui génèrent classiquement les commandes, on réalise simplement avec peu de matériel la commande des inversions de signe qu'il est nécessaire de faire pour réaliser la multiplication même lorsque la valeur θ d'entrée n'est pas dans le quadrant trigonométrique correspondant aux valeurs stockées. En particulier, ceci évite d'avoir à ajouter un multiplieur par - 1 pour effectuer des changements de quadrants ce qui consomme à la fois du temps de calcul et de la surface de circuit intégré.

Préférentiellement les troisièmes moyens délivrent des valeurs négatives exprimées en complément à 2. Ainsi avantageusement, pour un format binaire donné (nombre de bits et répartition des poids binaires), il est possible de représenter exactement la valeur - 1, ce qui ne serait pas possible avec la valeur + 1, exprimée en complément à deux, sans introduire une imprécision de calcul de 1 bit du poids le plus faible. Ceci constitue un avantage important dans le cas de multiplications effectuées à l'aide de l'algorithme de Booth décrit.

Selon un mode particulier de réalisation, les moyens qui délivrent les valeurs de la fonction trigonométrique calculent ces valeurs par interpolation autour d'un nombre limité de valeurs de fonction préalablement mémorisées. Ceci réduit également sérieusement la taille de la mémoire.

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent :

Figure 1 : un schéma d'un circuit multiplieur selon l'invention.

Figure 2 : un schéma d'un circuit multiplieur selon l'invention muni de moyens pour interpoler des valeurs de fonction entre des valeurs stockées dans un premier bloc-mémoire.

Figure 3 : un graphique d'une partie agrandie d'une fonction $F(\theta) = \cos(\theta)$.

Figure 4 : un schéma d'un circuit d'interpolation.

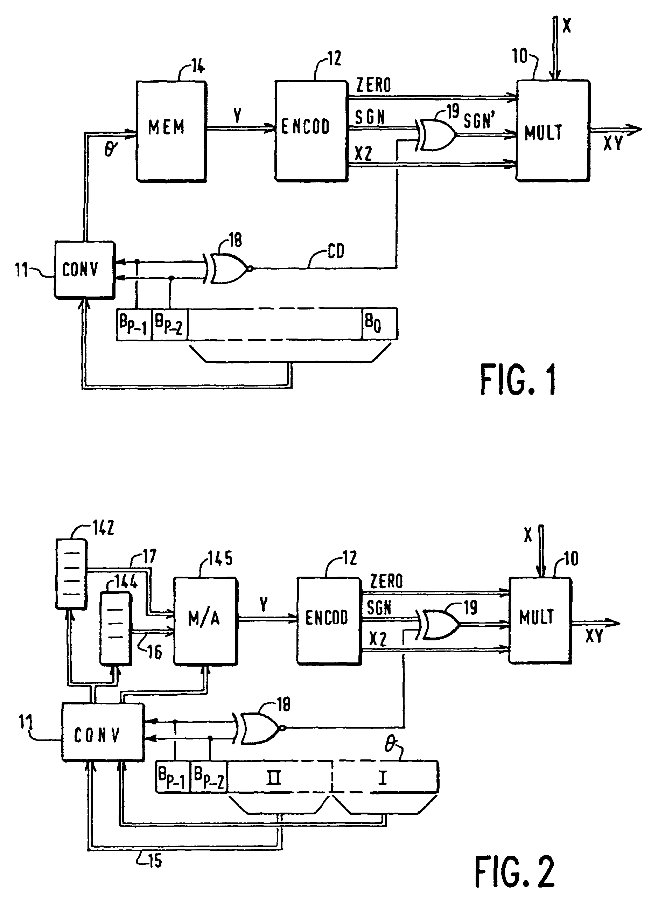

La figure 1 représente un cicuit multiplieur selon l'invention comprenant des moyens 10 MULT pour multiplier un multiplicande X par un multiplicateur Y conformément à l'algorithme de Booth, des moyens 12 ENCOD pour générer des commandes conformément à cet algorithme de Booth afin de permettre aux moyens 10 d'opérer, et des moyens 14 MEM pour délivrer les valeurs du multiplicateur Y au multiplieur 10.

L'algorithme de Booth consiste à ajouter un zéro en bit de poids faible puis à regrouper les bits du multiplicateur, exprimé en complément à 2, en groupes de trois bits consécutifs à partir du bit de poids faible ajouté et à en déduire les opérations à effectuer. Deux groupes consécutifs se chevauchent par un bit. Les trois bits d'un groupe imposent le type d'opérations à effectuer :

| Code | Opération |
|---|---|
| (001; 010) | - additionner le multiplicande à la somme partielle |
| (000; 111) | - ne rien faire |
| (011) | - additionner deux fois le multiplicande à la somme partielle |
| (101, 110) | - soustraire le multiplicande de la somme partielle |
| (100) | - soustraire 2 fois le multiplicande de la somme partielle. |

Ces cinq commandes peuvent être ramenées à trois commandes seulement :

| - ZERO | - ne rien faire |
|---|---|
| - SGN | - commande le signe de l'opération à effectuer |
| - X 2 | - détermine si le multiplicande doit être ajouté/retranché (selon SGN) une fois ou 2 fois de la somme partielle. |

Il y a donc autant de fois les trois commandes précécentes qu'il y a de triplets de bits dans le multiplicateur Y. Si celui-ci contient b bits, le nombre de triplets est égal à l'entier le plus proche soit de b/2 soit de b/2 + 1 selon la parité de b.

L'invention concerne des modifications de la commande du signe SGN délivrée normalement par un encodeur de Booth (12).

Le multiplieur 10 de Booth reçoit le multiplicande X et plusieurs lots des trois commandes précédentes. Le multiplicateur Y est codé par les moyens de codage 12 ENCOD pour délivrer la pluralité de commandes ZERO, SGN et X2. Dans l'invention, le multiplicateur Y représente des valeurs d'une fonction trigonométrique, par exemple $\cos \theta$. Il est obtenu en adressant des moyens de mémorisation 14, par exemple une mémoire MEM, qui ont préalablement été chargés par des valeurs de la fonction trigonométrique. L'argument $\theta$ de la fonction trigonométrique est fourni en entrée du circuit selon un mot binaire $B_{P-1}....B_0$. En utilisant les propriétés de symétrie de la fonction $\cos \theta$, il est possible de ne stocker dans la mémoire 14 que les valeurs $\cos \theta$ correspondant à $\pi/2 \leq \theta \leq \pi$, c'est-à-dire des valeurs négatives de $\cos \theta$. Les deux bits de poids fort $B_{P-1}$ et $B_{P-2}$ permettent de déduire les valeurs de $\cos \theta$ pour les autres valeurs de $\theta$.

Selon l'invention, on contrôle la commande de signe SGN de l'encodeur de Booth. Une porte 18 reçoit $B_{P-1}$ et $B_{P-2}$ et délivre un signal CD. Une famille 19 de portes OU - exclusif reçoit le signal CD et les signaux SGN issus de chaque triplet de bits de Y. En sortie, on obtient de nouveaux signaux de signe SGN' qui sont utilisés pour sélectionner le type d'opération à effectuer dans le multiplieur de Booth 10. Le mot binaire $B_{P-1}... B_0$ est codé en complément à 2.

Chaque nouvelle commande de signe SGN' est alors déduite de la table I de vérité suivante :

TABLE I

| $B_{P-1}$ | $B_{P-2}$ | CD | SGN | SGN' |
|-----------|-----------|----|-----|------|
| 0 | 1 | 0 | 0 | 0 |
| 0 | 0 | 1 | 0 | 1 |
| 1 | 0 | 0 | 1 | 1 |
| 1 | 1 | 1 | 1 | 0 |

Préférentiellement, la mémoire 14 stocke des valeurs négatives de cos θ donc avec $\pi/2 < \theta < \pi$ ou $\pi < \theta < 3\pi/2$.

Lorsque la valeur θ qui arrive en entrée du circuit n'est pas dans le quadrant correspondant aux valeurs stockées dans la mémoire, alors une unité de conversion 11 transforme la valeur θ d'entrée d'après les états logiques des bits de poids élevé $B_{P-1}$, $B_{P-2}$. Selon le contenu de la mémoire 14 (sinus ou cosinus), la conversion va consister à convertir θ en $\pi/2 - \theta$ et à modifier éventuellement le signe selon le quadrant concerné.

Pour réduire encore les moyens matériels, les moyens 14 qui délivrent la fonction trigonométrique peuvent opérer par interpolation autour d'un nombre limité de valeurs de la fonction trigonométrique préalablement memorisées (figure 2).

Le mot binaire $B_{P-1}... B_0$ est alors séparé en trois champs :

- un premier champ I formé par des bits de poids faible du mot binaire,
- un second champ II formé par des bits médians du mot binaire,
- un troisième champ III, formé par les bits $B_{P-1}... B_{P-2}$, qui sert à contrôler les commandes de signe comme exposé auparavant.

Les premier et second champs I et II servent à adresser (figure 2) une unité de conversion 11 CONV qui transforme les valeurs d'entrée θ en valeur de θ située dans le quadrant pour lequel on a mémorisé préalablement un nombre limité de valeurs de la fonction trigonométrique dans un premier bloc-mémoire 142. Les valeurs stockées peuvent être préalablement corrigées par des coefficients correctifs spécifiques destinés à réduire des erreurs engendrées par la méthode d'interpolation utilisée.

L'unité de conversion adresse aussi un second bloc-mémoire 144 dans lequel on a mémorisé préalablement des coefficients d'interpolation calculés pour les valeurs de la fonction trigonométrique qui ont été stockées dans le premier bloc-mémoire. Les coefficients d'interpolation peuvent être une dérivée vraie ou une dérivée approximative formée par exemple par la pente moyenne du segment joignant deux valeurs stockées consécutives de la fonction.

Ainsi en adressant les deux blocs-mémoires avec le champ médian II (avec ou sans conversion selon le cas), par exemple on peut lire la valeur de la fonction cos θ (avec corrections) et celle des coefficients d'interpolation pour cette valeur θ.

Le champ I de bits de poids faibles est alors exploité pour calculer une quantité interpolée liée à l'incrément fourni par le champ I.

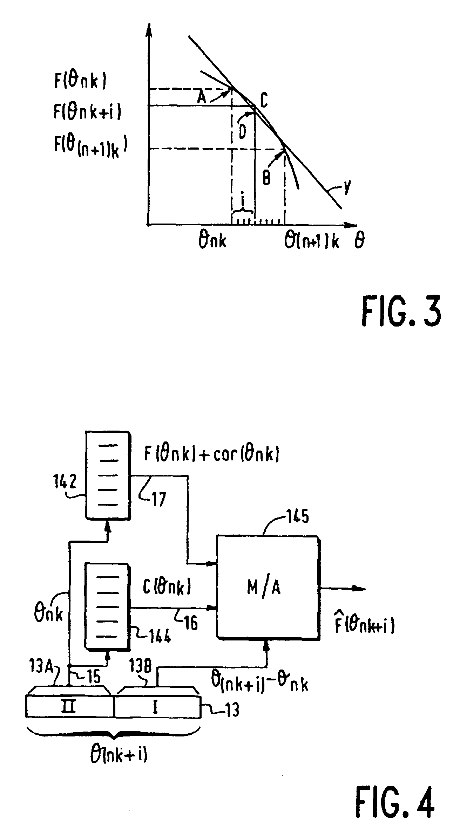

La figure 3 représente une partie d'une fonction F(θ) = cos(θ) connue par un nombre limité de valeurs $F(\theta_{nk})$ = $\cos(\theta_{nk})$ [point A], $F(\theta_{(n+1)k})$ = $\cos(\theta_{(n+1)k})$ [point B], pour des valeurs $\theta_{nk}$, $\theta_{(n+1)k}$ de la variable θ. Sur le graphique n est l'indice courant des points A, B..., avec $0 \leq n \leq \frac{N}{k} -1$, k étant un nombre entier déterminant le facteur d'interpolation, avec $\theta_n = 2\pi \frac{n}{N}$.

Lorsqu'une valeur quelconque $\theta_{nk+i}$ de la variable est présentée en entrée du circuit, celui-ci calcule, par interpolation, une valeur interpolée proche de la valeur $F(\theta_{nk+i})$ [point C]. Sous cette forme, l'indice i est un indice courant variant de 0 à k-1 afin de différencier k valeurs intermédiaires entre $\theta_{nk}$ et $\theta_{(n+1)k}$.

Pour représenter N valeurs de la variable θ, il faut $\log_2 N$ bits. Une valeur quelconque $\theta_{nk+i}$ de la variable est représentée par un mot binaire pour lequel on ignore les deux bits de poids forts du début pour ne considérer que les valeurs appartenant à un seul quadrant. Le mot binaire 13 (figure 2) comprend un premier champ 13A comportant des bits de poids fort et un second champ 13B comportant des bits de poids faible.

Selon l'invention, l'interpolation est effectuée en exploitant un nombre N/k de valeurs connues de la fonction. Ces N/k valeurs connues sont préférentiellement stockées préalablement dans un bloc-mémoire 142. Les valeurs connues $F(\theta_{nk})$ sont celles qui correspondent aux $\log_2 N/k$ bits de poids fort de la variable d'entrée.

Pour les N/k valeurs connues de la fonction (points A, B, etc), selon l'invention, on stocke également, préférentiellement dans des moyens de mémorisation 144, N/k coefficients d'interpolation $C(\theta_{nk})$. Ceux-ci peuvent être des valeurs de dérivée $F'(\theta_{nk})$ de la fonction $F(\theta_{nk})$. Ces valeurs de dérivée peuvent être des valeurs moyennes de dérivée calculées autour de chaque point connu A, B, etc. Préférentiellement, ces valeurs de coefficient d'interpolation sont égales à la pente des segments reliant deux points connus consécutifs.

Ces valeurs de coefficient d'interpolation peuvent également être formées par des valeurs vraies de dérivée calculées aux points connus A, B, etc.

Pour limiter les imprécisions, on stocke dans le bloc-mémoire 142 des valeurs connues de la fonction préalablement corrigées par des termes correctifs. Le bloc-mémoire stocke donc des valeurs $F(\theta_{nk})$ + cor$(\theta_{nk})$. Le terme cor$(\theta_{nk})$ est préalablement calculé pour chaque point connu pour minimiser l'erreur quadratique moyenne entre les valeurs interpolées et la fonction trigonométrique parfaite.

Lorsqu'une valeur d'entrée $\theta_{nk+i}$ est présentée à l'entrée du circuit, le champ 13A de bits de poids fort adresse (connexion 15) le bloc-mémoire 142 et les moyens de mémorisation 144 :

- le bloc-mémoire délivre $F(\theta_{nk})$ + cor$(\theta_{nk})$ constituant la valeur approchée de la valeur interpolée à déterminer (connexion 17),
- les moyens de mémorisation délivrent les coefficients d'interpolation $C'(\theta_{nk})$ (connexion 16).

Considérons le cas où la fonction $F(\theta_{nk})$ est une fonction cosinus et où les valeurs de coefficients d'interpolation sont déduites de la pente d'un segment y = a x+b. Ce segment passe au voisinage des deux points connus A et B pour indiquer que des coefficients de corrections interviennent dans le calcul des valeurs interpolées.

Une valeur approchée y de cos $(\theta_{nk+i})$ [point D] est alors telle que :

$$y = \frac{\cos\theta_{nk+k} - \cos\theta_{nk}}{\theta_{(nk+k)} - \theta_{nk}} (\theta_{nk+i} - \theta_{nk}) + \cos\theta_{nk}$$

avec

$$\theta_{nk+i} = \frac{2\pi}{N} (nk + i)$$

$$0 \le i \le k\text{-}1 \qquad 0 \le n \le \frac{N}{k}\text{-}1$$

Après des manipulations trigonométriques connues, on obtient :

$$Y = \left[-2 \sin\frac{(2n+1)k\pi}{N} . \sin\frac{k\pi}{N}\right] \frac{i}{k} + \cos\frac{2\pi}{N} nk$$

Pour obtenir une valeur interpolée *côs* $(\theta_{nk+i})$ plus proche de la valeur exacte cos $(\theta_{nk+i})$, on introduit un terme de correction cor $(\theta_{nk})$. Cette valeur interpolée est située entre les ordonnées des points D et C. Chaque terme de correction cor $(\theta_{nk})$ est déterminé en rendant minimum la somme $\Sigma(c\hat{o}s\,\theta_{nk+i} - \cos\theta_{nk+i})^2$ pour $0 \le i \le k\text{-}1$.

La valeur approchée *côs* $(\theta_{nk+i})$ s'écrit alors :

$$c\hat{o}s\ (\theta_{nk+i}) = \underbrace{\left\{-\frac{2}{k} \sin\left(\frac{2n+1}{N} . k\pi\right) . \sin\left(\frac{k\pi}{N}\right)\right\}}_{F'} i + \cos\left(\frac{2\pi}{N} nk\right) + cor\ (\theta_{nk})$$

Le circuit comprend des moyens de calcul 145, par exemple un multiplieur/accumulateur qui reçoit $C'(\theta_{nk})$ et le champ 13B formé des bits de poids faible de la valeur d'entrée $\theta_{nk+i}$.

Dans une première étape, les moyens de calcul 145 calculent le résultat partiel :

$$C(\theta_{nk}).i$$

et dans une seconde étape, ils ajoutent ce résultat partiel à la valeur approchée $F(\theta_{nk})$ + cor$(\theta_{nk})$ pour délivrer la valeur interpolée: *F* $(\theta_{nk+i})$ soit :

**5**

$$\hat{F}(\theta_{nk+i}) = [C'(\theta_{nk}) \cdot i] + F(\theta_{nk}) + cor(\theta_{nk})$$

Ainsi, il est possible de réduire la taille de la seconde mémoire en ne stockant qu'un nombre limité de valeurs sur un nombre réduit de bits tout en obtenant une précision élevée sur le résultat, ce qui est particulièrement intéressant dans la réalisation de circuits intégrés.

Dans le cas où ils délivrent des valeurs interpolées, les troisièmes moyens comprennent :

- le premier bloc-mémoire 142 pour mémoriser un nombre limité de valeurs négatives de la fonction correspondant au second champ de bits, à des adresses issues du second champ de bits,
- le second bloc-mémoire 144 pour mémoriser des coefficients d'interpolation associés aux valeurs mémorisées dans le premier bloc-mémoire, à des adresses issues du second champ de bits,
- des moyens d'interpolation

  - pour lire, dans le premier bloc-mémoire, une valeur approchée de la fonction en l'adressant par le second champ de bits de la variable d'entrée,
  - pour lire, dans le second bloc-mémoire, le coefficient d'interpolation en l'adressant par le second champ de bits de la variable d'entrée,
  - pour calculer une quantité interpolée en multipliant le premier champ de bits de la variable d'entrée par le coefficient d'interpolation adressé, la quantité interpolée étant totalisée avec la valeur approchée pour donner la valeur interpolée.

Le circuit peut être utilisé dans un système de traitement numérique de données pour effectuer des calculs de transformées de Fourier, de transformées en cosinus discrètes, ou d'autres transformées faisant appel à des fonctions trigonométriques.

Le circuit peut aussi être utilisé dans un système de transmission numérique dans lequel le circuit selon l'invention entre dans la réalisation d'un circuit numérique de récupération de porteuse. Dans ce cas, la variable d'entrée est une erreur de phase $\theta$ à partir de laquelle le circuit multiplie des valeurs $\cos \theta$ et $\sin \theta$ par un multiplicande formé par un symbole qui doit subir une correction de phase pour synchroniser la récupération de porteuse.

**Revendications**

1. Circuit pour multiplier une donnée (X) par une valeur d'une fonction trigonométrique d'une variable d'entrée ($\Theta$), le circuit comprenant :

   des moyens de conversion (11) de la variable d'entrée ($\Theta$) pour convertir la ladite variable d'entrée ($\Theta$) en une variable se trouvant dans un domaine trigonométrique limité prédéterminé lorsque ladite variable d'entrée ($\Theta$) n'est pas dans ledit domaine trigonométrique limité prédéterminé, afin que ledit circuit fonctionne avec toute valeur de la variable d'entrée ($\Theta$),
   des premiers moyens (10) pour exécuter une multiplication de la donnée (X) en appliquant un algorithme de Booth,
   des seconds moyens pour générer une pluralité de groupes de signaux de commandes (ZERO, SGN, X2) appliquées aux premiers moyens (10), chacun des groupes de signaux de commande correspondant à un groupe de bits décodé selon l'algorithme de Booth, chaque groupe de commandes comprenant un signal de commande de bit de signe (SGN),
   des troisièmes moyens (14) pour délivrer les valeurs de la fonction trigonométrique de ladite variable sur ledit domaine trigonométrique limité prédéterminé, lesdits troisième moyens fournissant les signaux à décoder aux seconds moyens (12),

   ledit circuit étant **caractérisé en ce que** le circuit comporte des moyens (18, 19) pour inverser les signaux de commande de signe (SGN) lorsque les deux bits de poids fort ($B_{p-1}$, $B_{p-2}$) de la variable d'entrée ($\Theta$) sont identiques.

2. Circuit selon la revendication 1 **caractérisé en ce que** les troisièmes moyens délivrent des valeurs négatives de la fonction trigonométrique.

3. Circuit selon la revendication 1 **caractérisé en ce que** les troisièmes moyens calculent la valeur de la fonction trigonométrique par interpolation autour d'un nombre limité de valeurs de fonction préalablement mémorisées.

**4.** Circuit selon la revendication 3 **caractérisé en ce que** la variable d'entrée étant représentée par un premier champ de bits de poids faible, par un second champ de bits de poids intermédiaire, et par un troisième champ de bits de poids fort, les troisièmes moyens calculent, par interpolation, une valeur interpolée de la fonction trigonométrique pour la valeur de la variable d'entrée, les troisièmes moyens comprenant :

- un premier bloc-mémoire pour mémoriser un nombre limité de valeurs négatives de la fonction correspondant au second champ de bits, à des adresses issues du second champ de bits,
- un second bloc-mémoire pour mémoriser des coefficients d'interpolation associés aux valeurs mémorisées dans le premier bloc-mémoire, à des adresses issues du second champ de bits,
- des moyens d'interpolation

    - pour lire, dans le premier bloc-mémoire, une valeur approchée de la fonction en l'adressant par le second champ de bits de la variable d'entrée,
    - pour lire, dans le second bloc-mémoire, le coefficient d'interpolation en l'adressant par le second champ de bits de la variable d'entrée,
    - pour calculer une quantité interpolée en multipliant le premier champ de bits de la variable d'entrée par le coefficient d'interpolation adressé, la quantité interpolée étant totalisée avec la valeur approchée pour donner la valeur interpolée.

**5.** Système de traitement numérique de données **caractérisé en ce qu'**il comprend au moins un circuit selon une des revendications 1 à 5 pour un calcul de transformée de Fourier ou de transformée en cosinus discrète ou de transformée faisant appel à une fonction trigonométrique.

**6.** Système de transmission numérique **caractérisé en ce qu'**il comprend au moins un circuit selon une des revendications 1 à 4 pour réaliser un circuit numérique de récupération de porteuse.

**Patentansprüche**

**1.** Schaltung zum Multiplizieren eines Datenwerts (X) mit einem Wert einer trigonometrischen Funktion einer Eingangsvariablen ($\Theta$), wobei die Schaltung enthält:

- Mittel zur Umwandlung (11) der Eingangsvariablen ($\Theta$), um die besagte Eingangsvariable ($\Theta$) in eine Variable umzuwandeln, die sich in einem vorbestimmten begrenzten trigonometrischen Bereich befindet, wenn die besagte Eingangsvariable ($\Theta$) nicht in dem besagten vorbestimmten begrenzten trigonometrischen Bereich liegt, damit die besagte Schaltung mit jedem Wert der Eingangsvariablen ($\Theta$) funktioniert,
- erste Mittel (10) zum Ausführen einer Multiplikation des Datenwerts (X) unter Verwendung eines Booth-Algorithmus,
- zweite Mittel zum Erzeugen einer Vielzahl von Steuerungssignalgruppen (ZERO, SGN, X2) zur Anwendung auf die ersten Mittel (10), wobei jede der Steuerungssignalgruppen einer entsprechend dem Booth-Algorithmus dekodierten Bitgruppe entspricht und jede Steuerungsgruppe ein Signal zur Steuerung des Vorzeichenbits (SGN) enthält,
- dritte Mittel (14) zum Ausgeben der Werte der trigonometrischen Funktion der besagten Variablen in den besagten vorbestimmten begrenzten trigonometrischen Bereich, wobei die besagten dritten Mittel den zweite Mitteln (12) die zu dekodierenden Signale liefern, und

    die besagte Schaltung **dadurch gekennzeichnet ist, dass** die Schaltung Mittel (18, 19) enthält, um die Steuersignale der Vorzeichen (SGN) umzukehren, wenn die beiden Bits großen Stellenwerts ($B_{p-1}$, $B_{p-2}$) der Eingangsvariablen ($\Theta$) identisch sind.

**2.** Schaltung nach Anspruch 1, **dadurch gekennzeichnet, dass** die dritten Mittel negative Werte der trigonometrischen Funktion ausgeben.

**3.** Schaltung nach Anspruch 1, **dadurch gekennzeichnet, dass** die dritten Mittel den Wert der trigonometrischen Funktion durch Interpolation um eine begrenzte Anzahl von im voraus gespeicherten Funktionswerten berechnen.

**4.** Schaltung nach Anspruch 3, **dadurch gekennzeichnet, dass** die Eingangsvariable von einem ersten Bitfeld geringen Stellenwerts, einem zweiten Bitfeld mittleren Stellenwerts und einem dritten Bitfeld großen Stellenwerts dargestellt wird, wobei die dritten Mittel durch Interpolation einen interpolierten Wert der trigonometrischen Funktion für den Wert der Eingangsvariablen berechnen und die dritten Mittel enthalten:

- Einen ersten Blockspeicher zum Abspeichern einer begrenzten Anzahl negativer Werte der Funktion entsprechend dem zweiten Bitfeld an aus dem zweiten Bitfeld ausgehenden Adressen,
- einen zweiten Blockspeicher zum Abspeichern der Interpolationskoeffizienten, die mit den im ersten Blockspeicher gespeicherten Werten verbunden sind, an aus dem zweiten Bitfeld ausgegangenen Adressen,
- Interpolationsmittel

  - zum Lesen im ersten Blockspeicher eines angenäherten Werts der Funktion mit dessen Adressierung durch das zweite Bitfeld der Eingangsvariablen,
  - zum Lesen im zweiten Blockspeicher des Interpolationskoeffizienten mit dessen Adressierung durch das zweite Bitfeld der Eingangsvariablen,
  - zum Berechnen einer interpolierten Menge mit der Multiplikation des ersten Bitfelds der Eingangsvariablen mit dem adressierten Interpolationskoeffizienten, wobei die interpolierte Menge mit dem angenäherten Wert für den Erhalt des interpolierten Werts summiert wird.

**5.** System zur digitalen Verarbeitung von Daten, **dadurch gekennzeichnet, dass** es zumindest eine Schaltung nach einem der Ansprüche 1 bis 5 zur Berechnung einer Fouriertransformierten oder einer diskreten Kosinustransformierten oder einer Transformierten enthält, die auf eine trigonometrische Funktion zurückgreift.

**6.** System zur digitalen Übertragung, **dadurch gekennzeichnet, dass** es zumindest eine Schaltung nach einem der Ansprüche 1 bis 4 zur Verwirklichung einer digitalen Schaltung für den Rückerhalt des Trägersignals enthält.

**Claims**

**1.** A circuit for multiplying a data (X) by a value of a trigonometric function of an input variable ($\Theta$), which circuit comprises:

conversion means (11) of the input variable ($\Theta$) for converting said input variable ($\Theta$) into a variable in a limited predetermined trigonometric domain when said input variable ($\Theta$) is not in said limited predetermined trigonometric domain, so that said circuit operates with any value of the input variable ($\Theta$),
first means (10) for carrying out a multiplication of the data (X) by applying a Booth algorithm,
second means for generating a plurality of groups of control signals (ZERO, SGN, X2) applied to the first means (10), each of the groups of control signals corresponding to a group of bits decoded in accordance with the Booth algorithm, each group of control signals comprising a sign bit control signal (SGN),
third means (14) for producing the values of the trigonometric function of said variable in said predetermined limited trigonometric domain, the third means supplying the signals to be decoded to second means (12),

said circuit being **characterized in that** the circuit comprises means (18, 19) for inverting the sign control signals (SGN) when the two most significant bits ($B_{p-1}$, $B_{p-2}$) of the variable input ($\Theta$) are identical.

**2.** A circuit as claimed in claim 1, **characterized in that** the third means produce negative values of the trigonometric function.

**3.** A circuit as claimed in claim 1, **characterized in that** the third means calculate the value of the trigonometric function via interpolation around a limited number of previously stored function values.

**4.** A circuit as claimed in claim 3, **characterized in that** the input variable which is represented by a first least-significant bit field, by a second median significant bit field and by a third most-significant bit field, the third means calculate via interpolation an interpolated value of the trigonometric function for the value of the input variable, while the third means comprise:

- a first memory bank for storing a limited number of negative values of the function which corresponds to the second bit field, at addresses coming from the second bit field,

- a second memory bank for storing interpolation coefficients associated to the values stored in the first memory bank, at addresses coming from the second bit field,
- interpolation means

  - for reading from the first memory bank an approximate value of the function by addressing the first memory bank via the second bit field of the input variable,
  - for reading from the second memory bank the interpolation coefficient by addressing the second memory bank via the second bit field of the input variable,
  - for calculating an interpolated quantity by multiplying the first bit field of the input variable by the addressed interpolation coefficient, while the interpolated quantity is summed with the approximate value to produce the interpolated value.

5. A digital data processing system, **characterized in that** it comprises at least one circuit as claimed in any one of the claims 1 to 4 for a calculation of a Fourier transform or discrete cosine transform or a transform that uses a trigonometric function.

6. A digital transmission system, **characterized in that** it comprises at least one circuit as claimed in any one of the Claims 1 to 4 for forming a digital carrier recovery circuit.

FIG. 1

FIG. 2

FIG. 3

FIG. 4